(19) Europäisches Patentamt
European Patent Office
Office européen des brevets

(11) **EP 0 932 342 B1**

(12) **EUROPEAN PATENT SPECIFICATION**

(45) Date of publication and mention
of the grant of the patent:
**29.09.2004 Bulletin 2004/40**

(51) Int Cl.⁷: **A23C 11/04**, A23C 9/15,
A23L 1/30, A23C 1/12

(21) Application number: **98917790.2**

(22) Date of filing: **21.04.1998**

(86) International application number:
**PCT/NL1998/000222**

(87) International publication number:
**WO 1998/047384 (29.10.1998 Gazette 1998/43)**

(54) **PROCESS OF PREPARING A FAT-CONTAINING FOODSTUFF**

VERFAHREN ZUR HERSTELLUNG EINES FETTHALTIGEN NAHRUNGSMITTELS

PROCEDE DE PREPARATION D'UNE DENREE ALIMENTAIRE CONTENANT DES MATIERES
GRASSES

(84) Designated Contracting States:
**CH DE DK FR GB IE LI NL**

(30) Priority: **21.04.1997 EP 97201170**

(43) Date of publication of application:
**04.08.1999 Bulletin 1999/31**

(73) Proprietor: **N.V. Nutricia**
**2700 MA Zoetermeer (NL)**

(72) Inventors:
• **VAN ES, Jentje, Freerk**
 **NL-6717 KR Ede (NL)**
• **VERDURMEN, Rudolph, Eduardus, Maria**
 **NL-3571 JB Utrecht (NL)**

(74) Representative: **van Westenbrugge, Andries et al**
**Nederlandsch Octrooibureau**
**P.O. Box 29720**
**2502 LS The Hague (NL)**

(56) References cited:
**EP-A- 0 624 317**    **EP-A- 0 639 333**
**WO-A-90/00862**    **DE-A- 2 628 225**
**DE-A- 2 631 703**    **GB-A- 945 977**
**GB-A- 1 122 179**    **GB-A- 1 232 640**
**GB-A- 2 255 703**    **GB-A- 2 273 234**
**US-A- 4 434 186**    **US-A- 4 810 518**

• **DATABASE WPI Section Ch, Week 9036 Derwent**
 **Publications Ltd., London, GB; Class D13, AN**
 **90-273268 XP002075116 & SU 1 500 236 A (DAIRY**
 **RES INST)**

EP 0 932 342 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a process of preparing a fat-containing foodstuff. More in particular, it relates to a process of in-line adding a fat phase to an aqueous phase in such a manner that a dry, powdered foodstuff, especially an infant formula, is obtained which meets strict standards as to microbiological safety, while sensitive components in the product remain undamaged.

A process for preparing milk concentrates by adding a fraction of the fat phase to the milk liquid within one or more effects of an evaporator, rather than to the milk liquid prior to the evaporation step, is described in EP-A-624317. This process uses a liquid container downstream of the evaporator for accommodating fluctuations in the composition of the mixture and for adding further components. Such a downstream container requires low temperatures for minimising microbial growth and increases the risk of microbial contamination. It is therefore either uneconomical from an energy point of view or of insufficient microbial safety, or both. When a greater proportion of fat has to be added, this may cause clogging and fouling problems in the subsequent stages of the evaporator. Furthermore, a complete mixing of the fat fraction and the aqueous phase with optimum particle size distribution is not always possible.

GB-A-2273234 discloses a process for producing a cream product, not a dry solid, by adding a vegetable fat to skimmed milk, heating and homogenising in two stages. GB-A-1122179 discloses a process of concentrating a solution using two or more evaporators and regulating the concentration process by adding a diluent. Further components such as milk fat may be added, without a homogenation being provided. EP-A-0639333 describes the preparation of a milk powder comprising adding a fat phase to concentrated skim milk followed by homogenising and spray-drying. SU-A-1500236 describes a similar process.

A process has been found which allows the preparation of a food product comprising an aqueous phase and a fat phase, having the following advantages:

- the fat phase can be added in such a manner that a well homogenised food product having desired particle size distribution is obtained;
- a fat phase containing sensitive components, such as long-chain poly-unsaturated fatty acid derivatives, can be added with minimised degradation of these sensitive components;
- the process does not require storage of the emulsion before final drying, which storage usually requires a tank capacity of 20 to 70 $m^3$; this results in energy savings and in optimum microbial safety;
- the food product is treated in such a manner that deterioration of heat-sensitive components in the food product, such as whey proteins, poly-unsaturated fatty acids and fat soluble components, is minimised.

Thus, the present invention provides a process for the preparation of a food product as defined in the appending claims.

The process of the invention comprises the addition of a fat phase to an aqueous phase and dehydrating the aqueous phase, as such and/or as part of an emulsion, by means of a series of evaporator effects. The fat phase is added in a line connecting two consecutive evaporator effects, and the mixture is homogenised immediately downstream of the point of addition by means of a homogeniser or other high-shear device. Preferably, a pump is located immediately before the point of fat addition, in the line conducting the aqueous phase. This mode of fat addition allows the process to be operated in a truly continuous manner. It also obviates the need for a liquid container downstream of the evaporator system to allow for final homogenation and tuning of the product composition; the homogenation and tuning are already achieved in the in-line homogeniser used according to the invention.

The fat phase to be added may be the entire fat phase of the final food product or a major part (at least 35%, preferably at least 50% by weight) of the fat phase comprising sensitive fatty components such as long-chain poly-unsaturated fatty acids (fish oil and the like). Most preferably, essentially the entire fat phase is added in-line, for example after UHT treatment of the aqueous phase. The addition of the fat phase between two evaporator effects rather than before or within one of the effects themselves was found to result in an optimum balance between fat quality (a heat-sensitive fat requiring exposure to heat being minimised), a total microbial safety, a homogeneous distribution of the fat phase in the aqueous phase and a saving in energy consumption required for complete homogenation. The process avoids creaming-up (e.g. after coalescence) of the fat phase after its addition to the aqueous phase, and thus further increases product homogeneity. Preferably no storage container is present before the spray-drying step and after the evaporator, other than an optional flow buffering unit. Such a unit is not used for adding or mixing components as is the case with prior art containers, but rather serves to accommodate minor capacity changes or other fluctuations. The average residence time in such a buffering unit (including the connecting lines) is less than 50 minutes, preferably less than 20 minutes, more preferably less than 10 minutes; for a large-scale installation these preferences correspond to a tank volume of less than about 2000 l and 1000 l, respectively.

The treatment according to the invention results in an emulsion with sufficiently small fat particles. This avoids clogging of process lines and devices and contributes to a high degree of homogeneity of the product. Preferably the particle size distribution of the fat phase in the aqueous phase has a D(4,3) of less then 0.8 $\mu$m and more than 0.3 $\mu$m; most preferably, the D(4,3) is below 0.6 $\mu$m. Preferably less than 2%, especially less than 1%, of the fat particles will have a particle size of more than 3 $\mu$m. The product obtained according to the invention is further characterised by a low oxidation state of the fat phase, in particular by a peroxide value of less than 1 meq, especially less than 0.8 meq per kg fat.

The fat phase is preferably added to the aqueous phase when the latter has a water content of between 48 and 92 % by weight, more preferably between 55 and 90% and especially between 60 and 85 % by weight. If the evaporator system comprises more than two effects, the fat may be added between the first and the second evaporator effect or between two later evaporator effects.

The fat phase is added to the aqueous phase according to a predetermined ratio between fat phase and aqueous phase, allowing a perfectly matched fat addition which is adapted to possible fluctuations in the composition of the aqueous phase. This is achieved by in-line measurement of the composition of the aqueous phase and the composition of the fat phase, feeding the measured data to a data processor and controlling the fat addition on the basis of the output of the data processor, e.g. by means of a processor-controlled pump. The composition of either phase can be determined by measuring its (volume) flow or mass flow and its density and/or dry substance content. As the density of the fat phase will usually be constant, its measurement can be dispensed with. If necessary a temperature correction can be applied. It will be obvious to the skilled person that the flow, mass flow, density and dry substance content are measured by equipment that actually measures other physical parameters such as refractive index, changes in coriolis tube frequencies and electric field changes.

The matched fat addition by measuring the composition of the two phases and controlling the addition on the basis of these measurements constitutes a separate aspect of the invention.

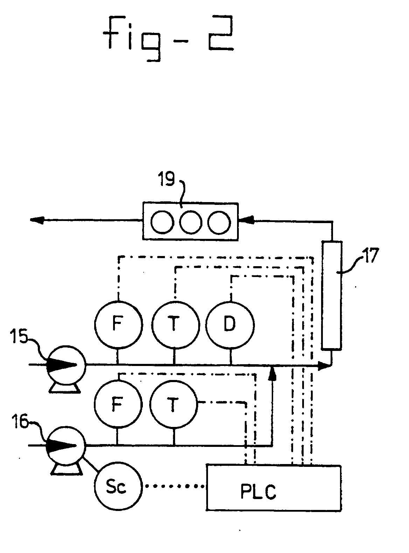

A system of dosing accurate amounts of fat to an aqueous phase is shown in figure 2.

The aqueous phase can be the concentrated phase issuing from a first effect of an evaporator, which is conducted by means of pump 15. Before the aqueous phase is pumped to the static mixer 17, the flow or mass flow, density or dry solids content and, if necessary, the temperature are measured. The results are used for calculating the total solids flow of the aqueous phase ($TSF_a$) in kg/h, using the formula (1):

$$TSF_a = mFlow_a * TS_a$$

$$= Flow_a * D_a * TS_a \qquad (1)$$

in which

$TS_a =$     the total solids content of the aqueous phase as can be measured or calculated from the density and the temperature, in wt.%,

$mFlow_a =$     mass flow of aqueous phase in kg/h,

$Flow_a =$     flow of aqueous phase in l/h,

$D_a =$     density of the aqueous phase in kg/l

The desired amount of fat is calculated from the total solids flow of the aqueous phase and the desired composition of the final product, using formula (2):

$$FatR = [Tf/(Tf+Ta)] * 100 = [TSF_f/(TSF_f+TSF_a)] * 100,$$

or

$$TSF_f = TSF_a * FatR/(100-FatR) \qquad (2)$$

and

$$TSF_f = Flow_f * D_f^t \qquad (3)$$

in which

FatR = desired fat content of the final product in wt.%
Tf = total fat content per kg of the final product
Ta = Total amount of water-soluble solids per kg of final product
$TSF_a$ = total solids flow of the aqueous phase
$TSF_f$ = total solids flow of the fat phase corrected for temperature
$D_f^t$ = density of the fat phase corrected for temperature
$Flow_f$ = flow of liquid fat in l/h.

Substituting (2) in (3) gives formula (4) and substituting (1) in (4) gives formula (5)

$$Flow_f = [TSF_a * FatR/(100-FatR)]/D_f^t \qquad (4)$$

$$Flow_f = [Flow_a * D_a * TS_a * FatR/(100-FatR)]/D_f^t, \qquad (5)$$

or

$$Flow_f = Flow_a * TS_a * FatR/(100-FatR) * D_a/D_f^t \qquad (5)$$

This amount of fat $Flow_f$ is pumped by pump 16 to the static mixer 17. The amount of fat actually pumped is checked by measurement of the flow and the temperature, and a programmable logic controller (PLC) will instruct the speed control Sc to adapt the speed of the pump 16, in order to maintain the flow as accurately as possible to the setting by applying methods (e.g. PI D regulation) known in the art.

In the process of the invention, the aqueous phase is prepared by using techniques that are known in the art. Milk, skimmed milk or solutions of caseinates, whey, demineralised whey, whey protein concentrates and/or other protein concentrates in water are used as basis for the aqueous phase. Appropriate amounts of water-soluble components such as lactose or other carbohydrates, minerals, trace elements, emulsifiers and/or some vitamins are dissolved in this liquid and homogeneously mixed in tank 1. Whole milk can be selected as a basis ingredient, if butter oil must be an important part of the fat composition in the final product.

A fat phase that is suitable for manufacturing according to the invention is prepared under conditions that prevent deterioration of the fat by using methods that are known in the art. The fat phase may comprise vegetable oils like soybean oil, rapeseed oil, palm kernel oil, coconut oil, sunflower oil, evening primrose oil, maize oil and/or fats from animal origin like butter oil or fish oil and/or structured fats and/or oils derived from microorganisms such as algae. The fat phase may also comprise emulsifiers like soy lecithin and/or fat soluble vitamins and/or antioxidants, added separately or as premix, or other compounds.

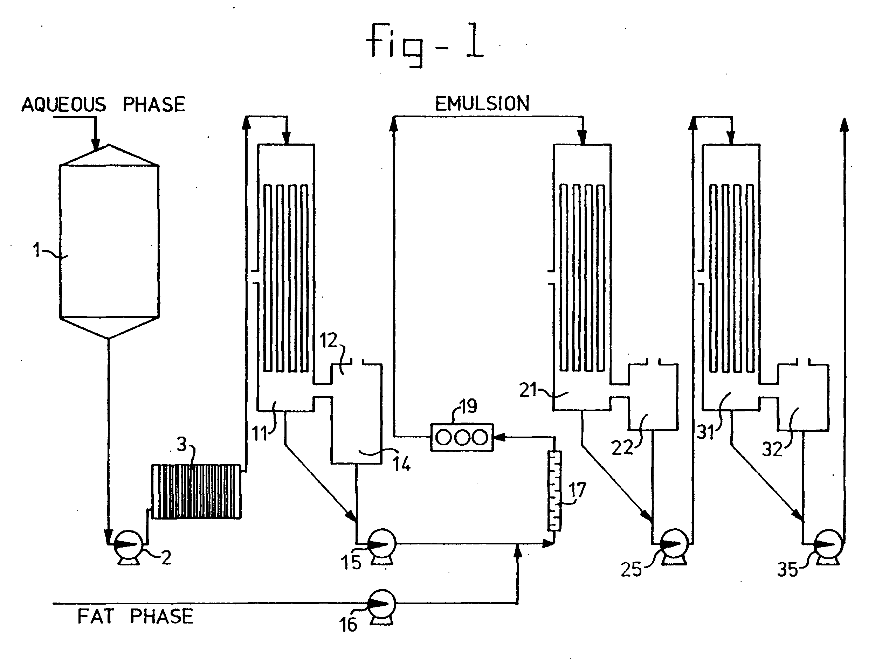

The process of the invention can be performed using an equipment as depicted in figure 1. In figure 1, vessel 1 is for storing and supplying the aqueous phase of the food product to be prepared, 2 is a pump for the aqueous phase, 3 is a heat exchanger, for example a steam infusion heater or steam injection heater for pasteurising or sterilising the aqueous phase, 11, 21 and 31 are evaporator effects for stepwise dehydrating the aqueous phase, 12, 22 and 32 are separators, 14 is a buffer tank, 19 is a homogeniser producing an emulsion which is fed to the next evaporator effect (21), 2 and 15 are pumps for the aqueous phase, 16 is a pump for supplying the fat phase of the food product, and 25 and 35 are pumps for the concentrated emulsion, with 35 pumping the concentrate to the spray-drier (not shown), optionally through a buffer tank and a preheater, but without a storage tank.

Example 1:

*Manufacturing process for infant formulae*

An infant formula is prepared from an aqueous phase and a fat phase. Table 1 lists the amounts of ingredients can be present in the aqueous phase of the infant formula.

Table 1:

| List of ingredients of aqueous phase | |
|---|---|
| *Ingredient* | *Amount in kg per 1000 l* |
| skimmed milk protein | 50-60 |
| demineralised whey powder | 50-60 |
| lactose | 100-130 |
| calcium carbonate | 2.0-4.3 |
| calcium phosphate | 0.2-3.5 |
| calcium chloride | 0.5-2.3 |
| magnesium chloride | 0.5-1.4 |
| sodium chloride | 0.2-1.0 |
| other sodium salts | 1.0-2.2 |
| potassium hydroxide | 0.1-1.3 |
| other potassium salts | 0.4-2.5 |
| choline chloride | 0.1-0.8 |
| vitamin premixes<br>      (B1, B2, B6, B12, folic acid, pantothenic acid, niacin, biotin, ascorbate, taurine) | 0.7-3.0 |
| trace element premixes<br>      (Fe, Cu, Zn, Mn, Mo, Se, Cr, I) | 0.1-0.6 |

The aqueous phase as produced in vessel 1 may be chilled for storage purposes or be used directly. It is heated in heat exchanger 3. The heating treatment that is applied must be sufficient to kill microorganisms that are present in the aqueous phase. Typical conditions are 70-150°C for 0.2 sec - 15 min, preferably 100-140°C for 1 sec - 5 min and most preferably 125-135°C for 2-30 seconds. Part of the water is subsequently evaporated from the aqueous phase in 11 until a dry solids content of 12-40% and more preferably 15-30% is obtained. The vapour separator 12 will separate the vapour (steam) from the product.

A fat phase that is suitable for manufacturing the infant formula is prepared under conditions that prevent deterioration of the fat by using methods that are known in the art. Table 2 provides a list of fat ingredients for a typical infant formula. The fat phase can be stored under appropriate conditions to prevent deterioration (such as creating a nitrogen blanket above the fat) or be used directly. An appropriate amount of the fat phase is dosed to the aqueous phase that flows from the first evaporator effect 11 and the vapour separator 12, using the system as described above with reference to figure 2. Step 12 is equipped with a buffer tank 14 in order to prevent homogeniser 19 from running dry.

Table 2:

| Fat composition of infant formula (fat blend) | |
|---|---|
| *Ingredient* | *Amount in kg per 1000 kg fat* |
| palm oil | 200-400 |
| rapeseed oil (low erucic acid) | 180-350 |
| sunflower oil (high oleic acid) | 150-250 |
| coconut oil | 150-250 |
| fish oil | 1-50 |
| butter oil | 1-10 |
| lecithins | 1-100 |
| vitamin premix<br>      (vitamins D, E, K, A + stabilisers, e.g. ascorbyl palmitate) | 0.1-0.5 |

For manufacturing a typical infant formula, sufficient amount of aqueous phase and fat phase are mixed together to obtain a final fat content of 20-35 % (w/w, dry substance basis). Mixing occurs by pumping the mixture through a static mixer 17. After mixing the mixture is immediately homogenised by homogeniser or other high-shear device 19, using conditions that are known in the art: if a two-stage homogeniser is used, the temperature will normally be in the range of 50-70°C and the pressure will be 100-250 bar in the first stage and 15-40 bar in the second stage.

The emulsion is further concentrated in one or more evaporator effects (21 and/or 31) in order to obtain a solids content that is suitable for direct spray-drying; this emulsion can directly be pumped to the spray-drier. For some products an additional homogenising step before the spray-drier may be advantageous. Various prior art spray-drying techniques can be applied.

## Claims

1. A process for preparing a dry food product comprising adding a fat phase to an aqueous phase to produce an emulsion, evaporating the aqueous phase in a plurality of evaporator effects and finally spray-drying the emulsion, *characterised* **by** continuously measuring fluctuations of the composition of the aqueous phase downstream of at least one evaporator effect, continuously adding the fat phase to the liquid aqueous phase according to a predetermined ratio between the fat phase and the aqueous phase taking into account said fluctuations, and homogenising the mixture of the fat phase and the aqueous phase, said measuring, adding and homogenising being applied in a line connecting two consecutive evaporator effects.

2. A process according to claim 1, wherein the dry substance content and/or density, the mass or volume flow and optionally the temperature of the aqueous phase are measured prior to the addition, as well as the mass or volume flow and optionally the density and/or the temperature of the fat phase prior to the addition.

3. A process according to claim 1 or 2, wherein the homogenised food product is dried immediately downstream of the last evaporator effect or the homogenising step.

4. A process according to any one of claims 1-3, wherein an average residence time between the last evaporator effect and the spray-drier of less than 50 minutes, preferably less than 20 minutes is applied.

5. A process according to any one of claims 1-4, wherein the evaporator effect upstream of the fat addition is provided with a buffer tank located near the outlet of said evaporator effect.

6. A process according to any one of claims 1-5, wherein the aqueous phase to which the fat phase is added has a water content of between 48 and 92 % by weight.

## Patentansprüche

1. Verfahren zum Herstellen eines Trockennahrungsprodukts, welches das Hinzufügen einer Fettphase zu einer wäßrigen Phase unter Herstellen einer Emulsion, das Verdampfen der wäßrigen Phase in einer Vielzahl von Verdampfer-Effekten (evaporator-effects) und schließlich das Sprühtrocknen der Emulsion, umfaßt, **gekennzeichnet durch** das kontinuierliche Messen der Fluktuationen der Zusammensetzung der wäßrigen Phase hinter mindestens einem Verdampfer-Effekt, das kontinuierliche Hinzufügen der Fettphase zu der flüssigen wäßrigen Phase nach einem vorbestimmten Verhältnis zwischen der Fettphase und der wäßrigen Phase unter Berücksichtigung der Fluktuationen und das Homogenisieren des Gemischs der Fettphase und der wäßrigen Phase, wobei das Messen, Hinzufügen und Homogenisieren in einer Linie, die zwei aufeinander folgende Verdampfer-Effekte verbindet, angewendet wird.

2. Verfahren nach Anspruch 1, wobei der Trockensubstanzgehalt und/oder -dichte, der Masse- oder Volumenfluß und gegebenenfalls die Temperatur der wäßrigen Phase vor dem Hinzufügen, wie auch der Masse- oder Volumenfluß und gegebenenfalls die Dichte und/oder die Temperatur der Fettphase vor dem Hinzufügen, gemessen werden.

3. Verfahren nach Anspruch 1 oder 2, wobei das homogenisierte Nahrungs produkt unmittelbar hinter dem letzten Verdampfer-Effekt oder dem Homogenisierungsschritt getrocknet wird.

4. Verfahren nach einem der Ansprüche 1 bis 3, wobei eine durchschnittliche Verweilzeit zwischen dem letzten Verdampfer-Effekt und dem Sprühtrockner von weniger als 50 Minuten, vorzugsweise weniger als 20 Minuten, angewendet wird.

5. Verfahren nach einem der Ansprüche 1 bis 4, wobei der Verdampfer-Effekt vor der Fettzugabe mit einem Pufferbehälter, der in der Nähe des Auslasses des Verdampfer-Effekts angeordnet ist, bereitgestellt wird.

6. Verfahren nach einem der Ansprüche 1 bis 5, wobei die wäßrige Phase, zu der die Fettphase hinzugefügt wird, einen Wassergehalt zwischen 48 und 92 Gew.-% aufweist.

**Revendications**

1. Procédé de préparation de produit alimentaire sec comprenant l'addition d'une phase grasse à une phase aqueuse pour produire une émulsion, l'évaporation de la phase aqueuse dans une pluralité d'effets d'un évaporateur et en fin le séchage par vaporisation de l'émulsion, **caractérisé par** la mesure en continu des fluctuations de la composition de la phase aqueuse en aval d'au moins un effet de l'évaporateur, l'addition en continu de la phase grasse à la phase aqueuse liquide selon un rapport prédéterminé entre la phase grasse et la phase aqueuse prenant en considération lesdites fluctuations, et l'homogénéisation du mélange de la phase grasse et de la phase aqueuse, lesdites mesure, addition et homogénéisation étant appliquées dans une ligne reliant deux effets d'évaporateur consécutifs.

2. Procédé selon la revendication 1, dans lequel la teneur et /ou la densité en substance sèche, le débit de la masse ou du volume et éventuellement la température de la phase aqueuse sont mesurés avant l'addition, ainsi que le débit de la masse ou du volume et éventuellement la densité et /ou la température de la phase grasse avant l'addition.

3. Procédé selon la revendication 1 ou 2, dans lequel le produit alimentaire homogénéisé est séché immédiatement en aval du dernier effet de l' évaporateur ou de l'étape d' homogénéisation.

4. Procédé selon l'une des revendications 1 à 3 , dans lequel est appliqué un temps de résidence moyenne entre le dernier effet d'évaporateur et le séchage par vaporisation inférieur à 50 minutes, de préférence inférieur à 20 minutes.

5. Procédé selon l'une quelconque des revendications 1 à 4, dans lequel l'effet de l'évaporateur en amont de l'addition de la matière grasse est équipée d'un réservoir tampon situé près de la sortie dudit effet d'évaporateur.

6. Procédé selon l'une quelconque des revendications 1 à 5, dans lequel la phase aqueuse à laquelle la phase grasse est ajoutée à une teneur en eau comprise entre 48 et 92 % en poids.

fig-1

AQUEOUS PHASE

EMULSION

EP 0 932 342 B1

FAT PHASE

Fig - 2